# FASCICULE DE BREVET EUROPEEN

(11) **EP 2 232 048 B1**
(45) Date de publication et mention de la délivrance du brevet: **12.04.2017**
(21) Numéro de dépôt: 08861586.9
(22) Date de dépôt: 04.11.2008
(51) Int. Cl.: F02N 11/04

(54) **PROCEDE DE COMMANDE D'UN ALTERNO-DEMARREUR AUTOPILOTE COMPORTANT UNE ETAPE ABREGEE DE PREFLUX**
ANSTEUERVERFAHREN EINES SELBSTGEFÜHRTEN STARTER-GENERATORS MIT EINEM ABGEKÜRZTEN VORMAGNETISIERUNGSSCHRITT
METHOD FOR CONTROLLING A SELF-PILOTED ALTERNATOR-STARTER, INCLUDING A SHORTENED PREFLUX STEP

(30) Priorité: 17.12.2007 FR 0759875
(43) Date de publication de la demande: 29.09.2010
(73) Titulaire: Valeo Equipements Electriques Moteur, 94046 Créteil Cedex (FR)
(72) Inventeur: ARMIROLI, Paul, 94440 Marolles En Brie (FR); ROUIS, Oussama, 94000 Creteil (FR); QUINCEROT, Julien, 94700 Maisons Alfort (FR)
(86) Numéro de dépôt international: PCT/FR2008/051985
(87) Numéro de publication internationale: WO 2009/077687

(56) Documents cités:
- WO-A-2006/032792
- WO-A-2006/032796
- US-A- 4 845 418
- US-A1- 2006 017 290
- US-B1- 6 335 609

## Description

L'invention se rapporte à un procédé de commande d'un alterno-démarreur autopiloté pour le démarrage ou la relance d'un moteur thermique de véhicule automobile.

L'invention se rapporte plus particulièrement à un procédé de commande d'un alterno-démarreur autopiloté pour le démarrage ou la relance d'un moteur thermique de véhicule automobile, l'alterno-démarreur comportant :
- un rotor équipé d'un bobinage de rotor ;
- un stator équipé d'un jeu de bobinages de stator ;
- un organe de transmission souple du couple du rotor de l'alterno-démarreur au vilebrequin du moteur thermique, tel qu'une courroie de transmission ;
le procédé de commande comportant :
- une première étape de préflux au cours de laquelle le bobinage de rotor est excité par un courant électrique de préflux de manière à induire un champ magnétique rotorique tandis que les bobinages de stator ne sont pas excités de manière que le rotor ne soit pas entraîné en rotation ;
- et une deuxième étape de démarrage qui est déclenchée à la fin de la première étape de préflux et au cours de laquelle les bobinages de stator sont excités tandis que le bobinage de rotor est maintenu excité de manière que le rotor soit entraîné en rotation.

Des machines de ce type sont connues de l'état de la technique, et notamment de la demande de brevet WO-A-1.169.762. Dans ce document, l'alterno-démarreur est un alternateur réversible qui est apte à être utilisé dans un véhicule automobile à moteur thermique, d'une part, comme générateur électrique, et, d'autre part, comme moteur électrique notamment pour le démarrage du moteur thermique du véhicule.
Voir aussi, WO 2006/032796 A.

Un tel alterno-démarreur est notamment utilisé dans des systèmes dits d'arrêt et de relance du moteur thermique, par la suite désigné "système d'arrêt-relance du moteur thermique", autrement connu sous la dénomination anglosaxonne "stop and start".

Ces systèmes permettent d'arrêter le moteur thermique pendant les phases d'arrêt du véhicule, et de le redémarrer ou de le relancer dés l'apparition d'un stimulus tel que la première sollicitation du conducteur ou un autre critère visant a générer des économies de carburant.

Pour pouvoir fonctionner de manière réversible, l'alterno-démarreur est lié en rotation au vilebrequin par l'intermédiaire d'un organe de transmission souple, par exemple par une courroie de transmission.

Lors de l'utilisation de l'alterno-démarreur dans un système d'arrêt-relance du moteur thermique, il est préférable que le temps de réponse entre le stimulus et le redémarrage effectif du moteur thermique soit le plus bref possible, par exemple inférieur à 350 ms.

L'alterno-démarreur doit notamment produire un couple de démarrage supérieur à un couple résistant du moteur thermique. Le couple résistant du moteur thermique est égal la somme d'un couple de décollage prenant en compte l'inertie des éléments mobiles du moteur thermique ainsi que les forces de frottement s'opposant à leur mouvement, et d'un couple de compression du fluide contenu dans les cylindres du moteur thermique.

A cet effet, il est connu de réaliser une étape préalable de préflux au cours de laquelle le rotor de l'alterno-démarreur est alimenté en électricité sans que le stator ne soit alimenté.

Durant cette étape de préflux, l'intensité du courant électrique circulant dans le bobinage de rotor augmente progressivement du fait de l'inductance du bobinage de stator. De manière connue, l'intensité du champ magnétique rotorique est proportionnelle à l'intensité du courant électrique.

Lorsque le champ magnétique rotorique atteint un palier prédéterminé correspondant à un régime permanent, en général pour une durée de l'étape de préflux au-delà de 150 ms, le stator est alimenté dans une étape suivante pour permettre la rotation du rotor. Ainsi, l'alterno-démarreur produit un couple de démarrage très élevé, ce qui permet une relance très rapide du moteur thermique.

Cette manière de procéder donne entière satisfaction lorsque le moteur thermique arrêté oppose un couple résistant faible. C'est notamment le cas des moteurs thermiques présentant un couple résistant jusqu'à approximativement 170 Nm en valeur pic. On notera que la valeur pic indiquée ci-dessus est la somme du couple dû au gaz plus le couple inertiel plus le couple dû au frottement.

On a cependant constaté que ce procédé ne pouvait pas être appliqué tel quel à des moteurs thermiques possédant un couple résistant plus important. Dans cette configuration, le brin tendu de la courroie de transmission entre l'alterno-démarreur et le vilebrequin subit, lors de la mise en rotation du rotor, une mise sous tension brutale qui est susceptible de l'endommager.

Pour résoudre ce problème on a déjà proposé de remplacer la courroie de transmission standard par une courroie de transmission plus résistante. Cependant, cette solution est très onéreuse.

Pour résoudre notamment ce problème, l'invention propose un procédé de commande d'un alterno-démarreur du type décrit précédemment, caractérisé en ce que l'étape de préflux dure entre 10 et 100 ms de manière que la courroie de transmission soit tendue en deçà d'une tension de détérioration lors du déclenchement de la deuxième étape de démarrage.

Selon d'autres caractéristiques de l'invention :
- l'étape de préflux dure 10 ms ;
- la durée de l'étape de préflux est inférieure à la durée nécessaire pour l'établissement d'un régime permanent du champ magnétique rotorique par rapport à l'intensité du courant de préflux ;
- la rotation du champ magnétique statorique est commandée à 120° d'angle électrique ;
- la rotation du champ magnétique statorique est commandée à 180° d'angle électrique ;
- le décalage angulaire magnétique entre le champs magnétique statorique et le champ magnétique rotorique est variable entre 0° et 90° ;
- le décalage angulaire magnétique est fixé à un angle déterminé ;
- le décalage angulaire magnétique varie de manière linéaire entre un premier angle déterminé et un deuxième angle déterminé ;
- le décalage angulaire magnétique varie de manière discrète par échelons d'angles déterminés.

D'autres caractéristiques et avantages apparaîtront au cours de la lecture de la description détaillée qui va suivre pour la compréhension de laquelle on se reportera aux dessins annexés parmi lesquels :
- la figure 1 est une vue en coupe axiale qui représente un alterno-démarreur ;
- la figure 2 est une vue de face qui représente schématiquement les poulies de l'alterno-démarreur et du moteur thermique qui sont reliées en rotation par une courroie de transmission ;
- la figure 3 est un schéma qui représente le système de commande électronique de l'alterno-démarreur ;
- la figure 4 est un schéma-bloc qui représente le procédé de commande de l'alterno-démarreur selon les enseignements de l'invention ;
- la figure 5 est un diagramme qui représente l'intensité du courant électrique alimentant le bobinage de rotor en fonction du temps ;
- la figure 6 est un diagramme qui représente la variation de l'intensité électrique en fonction de l'angle électrique dans une phase du stator commandé en 120° d'angle électrique.

Dans la suite de la description, des éléments ayant des fonctions identiques, analogues ou similaires seront désignés par des mêmes numéros de référence.

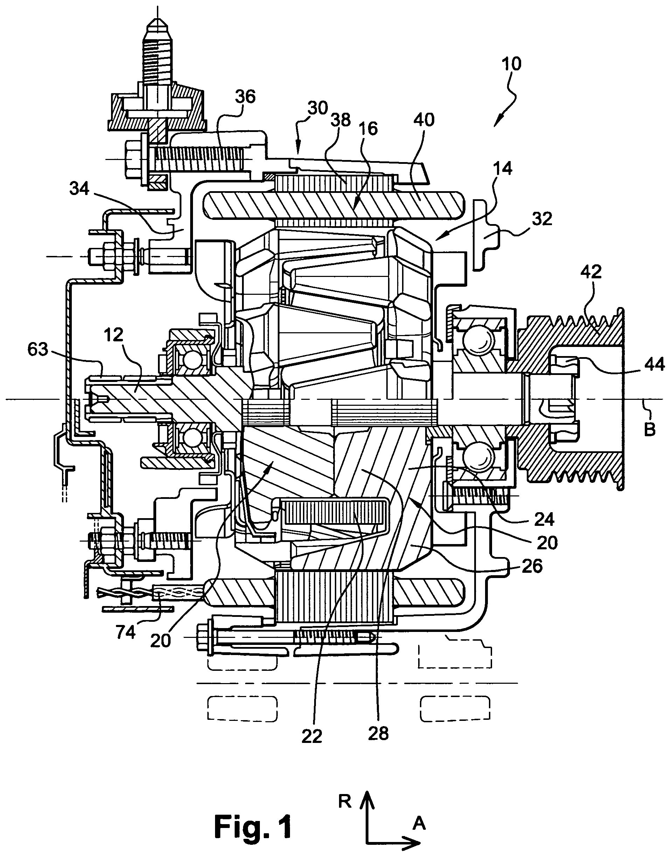

Afin de faciliter la compréhension de la description et des revendications, on utilisera, à titre non limitatif, une orientation axiale dirigée d'arrière en avant qui est indiquée par la flèche "A" de la figure 1 et qui est parallèle à l'axe de rotation "B" de l'arbre central, et une orientation radiale dirigée de l'intérieur vers l'extérieur depuis l'axe de rotation "B" de l'arbre central perpendiculairement à l'orientation axiale "A", et qui est indiquée par la flèche "R".

On a représenté à la figure 1 une machine électrique tournante 10. La machine électrique tournante 10 est un alternateur fonctionnant de manière réversible pour de véhicule automobile à moteur thermique 11.

Un tel alternateur est appelé alterno-démarreur 10 et comprend un arbre central 12 rotatif, un rotor 14 solidaire en rotation de l'arbre central 12, un stator 16 polyphasé fixe entourant le rotor 14, et des moyens de détermination de la position angulaire (non représentés) du rotor 14.

L'alterno-démarreur 10 forme ainsi un moteur électrique synchrone autopiloté.

L'arbre central 12 est monté rotatif autour de son axe "B". L'axe "B" définit l'axe de rotation de l'alterno-démarreur 10, ici du type polyphasé.

Le rotor 14 est solidaire en rotation de l'arbre central 12 et forme avec celui-ci un ensemble rotorique tournant.

Le rotor 14 est un rotor à griffes, qui comprend deux roues polaires 20 à griffes et un bobinage de rotor 22 agencé axialement entre les roues polaires 20. Chaque roue polaire 20 comporte un flasque 24 s'étendant radialement autour de l'arbre central 12 et portant à sa périphérie extérieure des griffes 26 d'orientation axiale dirigées vers le flasque 24 de l'autre roue polaire 20.

Chaque griffe 26 présente une forme trapézoïdale. Les griffes 26 d'une roue polaire 20 sont imbriquées circonférentiellement entre les griffes 26 de l'autre roue polaire 20.

Un noyau 28, réalisé par exemple en fer doux, est interposé axialement entre les flasques 24 des roues polaires 20. Le bobinage de rotor 22 est agencé autour du noyau 28. Le noyau 28 est ici réalisé en deux tronçons qui sont chacun réalisés venus de matière avec le flasque 24 d'une roue polaire 20 associée.

Lorsque le bobinage de rotor 22 est alimenté électriquement, un champ magnétique rotorique "CMr" est produit, les griffes 26 de l'une des roues polaires 20 définissant des pôles magnétiques "Nord", et les griffes 26 de l'autre roue polaire 20 définissant des pôles magnétiques "Sud".

Le stator 16 est porté par un carter 30 fixe qui renferme le stator 16 et le rotor 14. Le carter 30 comprend des paliers avant et arrière 32 et 34, qui sont refermés l'un sur l'autre et fixés l'un avec l'autre ici avec des tirants dont l'un est visible et est référencé en 36 à la figure 1.

Le stator 16 comporte un corps de stator 38 annulaire coaxial à l'arbre central 12 et porte un jeu de bobinages de stator 40.

Le corps de stator 38 du stator 16 est solidaire du carter 30 fixe et est porté intérieurement par celui-ci. Ici par simplicité les paliers 32, 34 n'ont pas été représentés en coupe mais en section.

De manière connue, le corps de stator 38 est réalisé en un paquet de tôles empilées axialement dans lequel sont ménagées une série d'encoches axiales contenant des enroulements des bobinages de stator 40 à raison d'au moins un enroulement par phase que comporte l'alterno-démarreur 10, ici du type triphasé, en variante du type hexaphasé et plus généralement de type polyphasée (par exemple 5, 7 phases ou plus).

Lorsqu'ils sont alimentés en électricité, les bobinages de stator 40 produisent un champ magnétique statorique "CMs". Comme cela sera expliqué plus en détail par la suite, chaque phase du bobinage de stator 40 est alimentée de manière à créer un champ magnétique statorique "CMs" tournant.

L'arbre central 12 se prolonge au-delà du palier avant 32, pour porter un organe de transmission de mouvement 42 sous la forme d'une poulie d'alterno-démarreur 42 fixée, ici à l'aide d'un écrou 44, sur l'arbre central 12 à l'extérieur dudit palier avant 32. Cette poulie d'alterno-démarreur 42 est solidaire en rotation de l'arbre central 12 du rotor 14.

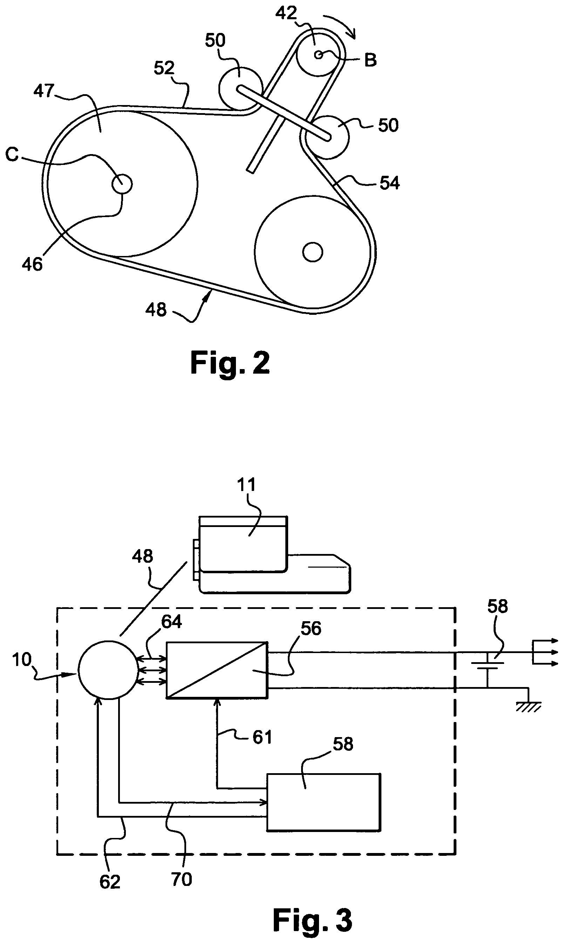

Comme cela est représenté à la figure 2, le moteur thermique 11 comporte un vilebrequin 46 d'axe "C" parallèle à celui du rotor 14. Le vilebrequin 46 est aussi équipé d'une poulie de moteur 47 similaire qui est solidaire en rotation du vilebrequin 46.

Comme représenté à la figure 2, un organe souple de transmission 48 tel qu'une courroie de transmission, par exemple à rainures en "V", est agencé autour de la poulie d'alterno-démarreur 42 et de la poulie de moteur 47 par laquelle le rotor 14 entraîne le vilebrequin 46 du moteur thermique 11 du véhicule automobile lorsque l'alterno-démarreur 10 fonctionne en mode démarreur ou relanceur.

Inversement, cette poulie d'alterno-démarreur 42 et la courroie de transmission 48 qui lui est associée permettent aussi au moteur thermique 11 du véhicule d'entraîner l'alterno-démarreur 10, lorsque ledit alterno-démarreur 10 fonctionne en mode alternateur.

Lorsque la courroie de transmission 48 est entraînée en rotation par l'une ou l'autre des poulies 42, 47, dite poulie motrice, le brin de courroie de transmission 48 agencée en aval de la poulie motrice 42, 47 est détendu tandis que l'autre brin amont est tendu. Deux galets tendeurs 50 mobiles radialement sont agencés contre chacun des deux brins de la courroie de transmission 48 de manière à tendre les deux brins en permanence, quel que soit le sens de rotation de la courroie de transmission 48.

Pour la suite de la description, on ne considérera que le fonctionnement en mode démarreur de l'alterno-démarreur 10. La poulie motrice sera donc la poulie d'alterno-démarreur 42 et elle tournera dans un sens horaire. Le brin tendu sera désigné par la référence 52, tandis que le brin détendu sera désigné par la référence 54.

De manière générale, la chaîne de transmission de mouvement entre l'arbre central 12 et le moteur thermique 11 du véhicule comporte au moins un organe souple de transmission 48 tel qu'une courroie de transmission 48. Ainsi l'organe de transmission de mouvement 48 peut avoir de nombreuses configurations.

Comme représenté schématiquement à la figure 3, l'alterno-démarreur 10 est commandé par un dispositif électronique de gestion et de commande du type décrit dans le document FR-A-2.745.444. Le dispositif de gestion et de commande comprend un étage de puissance doté d'un onduleur, par exemple à transistors du type MOSFET, constituant un convertisseur 56 transformant un courant continu fourni par une source de courant continu 58 en courant alternatif triphasé et une unité électronique de commande 60 qui commande le convertisseur 56 par l'intermédiaire d'une ligne électrique 61.

La source de courant continu 58 est une batterie du véhicule

En variante, la source de courant continu comporte des ultra-capacités parfois appelées "UCap" qui sont des accumulateurs d'énergie électrique ayant une grande capacité.

L'unité électronique de commande 60 est susceptible d'alimenter en courant d'excitation le bobinage de rotor 22 qui est fourni par la source de courant continu 58. A cet effet, l'unité électronique de commande 60 est reliée électriquement par l'intermédiaire d'une ligne électrique 62 à un dispositif porte-balais, non représenté, comprenant des balais en contact avec des bagues collectrices 63 portées par l'arbre central 12 comme représenté à la figure 1. Le bobinage de rotor 22 est ainsi alimenté par un courant d'excitation continu d'intensité constante fourni par la batterie 58.

Les bobinages de stator 40 sont quant à eux chacun reliés par une liaison 64 à câbles et connecteurs à une phase du convertisseur 56de manière à être alimenté en courant alternatif d'intensité "Is" variable. On voit à la figure 1 l'une des sorties 74 des bobinages de stator 40.

Ici l'alterno-démarreur 10 est du type de celui décrit dans le document WO-A-0.169.762 auquel on se reportera.

Il s'agit d'un alterno-démarreur 10 autopiloté. A cet effet, des moyens de détermination de la position angulaire (non représentés) du rotor 14 sont prévus et comportent classiquement trois capteurs par exemple de type à effet Hall. Ces capteurs sont reliés à l'unité électronique de commande 60 par l'intermédiaire d'une ligne électrique 70, et transmettent à celle-ci des signaux qui sont fonctions des champs magnétiques reçus. L'unité électronique de commande 60 traite lesdits signaux pour en déduire la position angulaire du rotor 14, puis commander le convertisseur 56 en fonction de cette position angulaire.

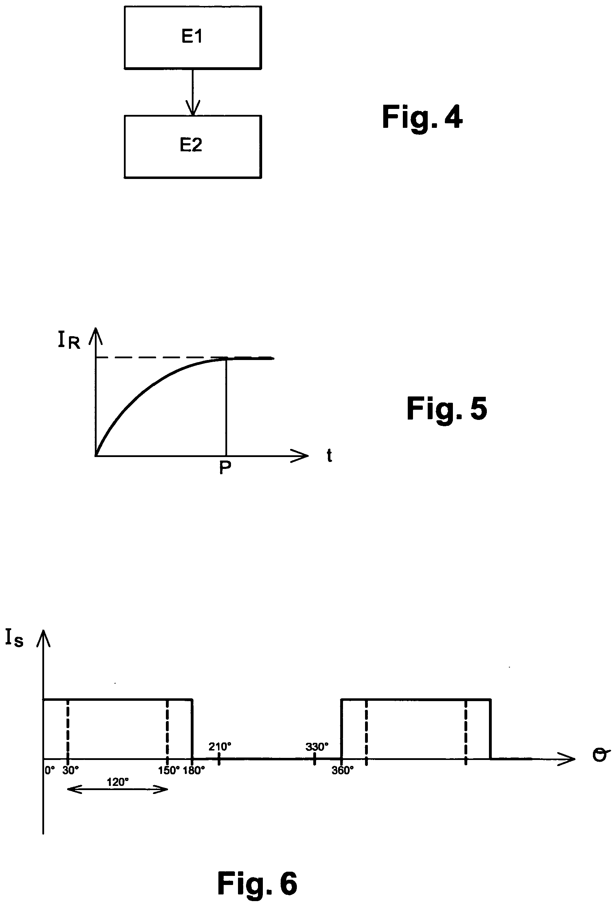

De manière connue, et comme représenté à la figure 4, le procédé de commande de l'alterno-démarreur 10 autopiloté pour le démarrage ou la relance du moteur thermique 11 comporte au moins deux étapes successives.

Lors de la première étape de préflux "E1 ", le bobinage de rotor 22 est excité par un courant électrique de préflux de manière à induire un champ magnétique rotorique "CMr".

Durant cette première étape de préflux "E1", les bobinages de stator 40 ne sont pas excités. Ainsi, en l'absence de champ magnétique statorique "CMs", le rotor 14 n'est pas entraîné en rotation.

L'intensité "Ir" du courant qui parcoure les spires du bobinage de rotor 22 augmente progressivement, schématiquement selon la courbe représentée à la figure 5, du fait de l'inductance du bobinage de rotor 22. Cette étape de préflux "E1" permet ainsi d'établir le champ magnétique rotorique "CMr" avant la création du champ magnétique statorique "CMs" pour obtenir un couple élevé de démarrage du rotor 14.

De manière connue, l'étape de préflux "E1" dure jusqu'à ce que le champ magnétique rotorique "CMr" soit sensiblement établi en régime permanent, c'est-à-dire au-delà du point "P" du diagramme, pouvant aller jusqu'à 150 ms pour un usage dans un véhicule automobile dont le moteur thermique 11 présente un faible couple résistant.

Puis, lors d'une deuxième étape de démarrage "E2", les bobinages de stator 40 sont excités par le courant alternatif fourni par le convertisseur 56, tandis que le bobinage de rotor 22 est maintenu excité de manière que le rotor 14 soit entraîné en rotation avec un couple de démarrage suffisant pour vaincre le couple résistant du moteur thermique 11.

La deuxième étape de démarrage "E2" est déclenchée automatiquement dés la fin chronométrée de l'étape de préflux "E1".

Lors du démarrage de la rotation de la poulie de l'alterno-démarreur 10, tandis que la vitesse de rotation de la poulie de moteur 47 est nulle, le brin tendu 52 de la courroie de transmission 48 est mis sous tension brutalement par un à-coup. Cette tension sera par la suite appelée tension de pointe. Puis la tension de la courroie de transmission 48 décroît en deçà de sa tension de pointe du fait notamment que la poulie de moteur 47 commence à tourner. Seul le couple de compression s'oppose au couple de l'alterno-démarreur 10.

La diminution de la tension de la courroie de transmission 48 peut aussi être due à une diminution pilotée du couple de l'alterno-démarreur 10.

La tension de pointe du brin tendu 52 de la courroie de transmission 48 est approximativement égale au produit du rayon de la poulie d'alterno-démarreur 42 en mètre par le couple produit par l'alterno-démarreur 10 lors de la deuxième étape de démarrage "E2". D'autres facteurs tels que la vitesse de mise sous tension du brin tendu 52 sont aussi susceptibles d'influer sur la valeur de la tension de pointe du brin tendu 52 lors du démarrage du rotor 14.

On a constaté que lors de l'application de ce procédé à des moteurs présentant un couple résistant élevé, par exemple supérieur à 170 Nm, la tension de pointe dans le brin tendu 52 de la courroie de transmission 48 est supérieure à une tension de détérioration à partir de laquelle la courroie de transmission 48 est susceptible d'être usée prématurément par fatigue, voire rompue.

La tension de détérioration d'un courroie de transmission 48 standard de type à plusieurs Vé, comme utilisée dans l'automobile, se situe vers 500 N/Vé.

Pour résoudre ce problème, l'invention propose que la première étape de préflux "E1" dure entre 10 et 150 ms de manière que la courroie de transmission 48 soit tendue en deçà d'une tension de détérioration lors de la deuxième étape de démarrage "E2", tout en conservant un temps de démarrage du moteur thermique 11 qui soit acceptable pour un système d'arrêt-relance d'un moteur thermique 11 de véhicule automobile.

De préférence, l'étape de préflux "E1" dure entre 10 et 100 ms, et plus particulièrement environ 10 ms.

En effet, en se reportant au diagramme de la figure 5, on constate que lors de l'étape de préflux "E1" l'intensité du courant électrique augmente progressivement jusqu'à atteindre l'intensité du courant de préflux. On rappelle que l'intensité du champ magnétique rotorique "CMr" est proportionnelle à celle du courant électrique parcourant le bobinage de rotor 22.

En abrégeant cette étape de préflux "E1" avant que l'intensité du champ magnétique rotorique "CMr" n'atteigne sa valeur de régime permanent, le couple produit par l'alterno-démarreur 10 provoque une tension de pointe du brin tendu 52 de la courroie de transmission 48 inférieure à sa tension de détérioration.

Ainsi, le moteur thermique 11 est relancé plus vite que dans le cas où l'étape de préflux "E1" n'existe pas, mais la tension de pointe de la courroie de transmission 48 est inférieure à sa tension de détérioration, tandis que le couple de démarrage de l'alterno-démarreur 10 est supérieur au couple résistant du moteur thermique 11.

Puis, le couple produit par l'alterno-démarreur 10 est modulé par le dispositif de gestion. La poulie de moteur 47 ayant alors commencé à tourner, la tension de pointe dans le brin tendu 52 de la courroie de transmission 48 ne dépasse pas la tension de détérioration.

Au cours de la deuxième étape de démarrage "E2", la rotation du champ magnétique statorique "CMs" est commandée à 120° d'angle électrique "θ", c'est-à-dire que la courbe d'alimentation de chaque phase du stator 16 présente un profil en créneau similaire à celui représenté au diagramme de la figure 6, les phases du stator 16 étant déphasés de 120° entre elles.

A cette fin, le convertisseur de courant est commandé par l'unité électronique de commande 60 en fonction des indications fournies par les capteurs de position du rotor.

Selon une variante non représentée de l'invention, la rotation du champ magnétique statorique "CMs" est commandée à 180° d'angle électrique "θ". Ainsi chaque phase présente un profil de créneaux "pleins" c'est-à-dire ne comportant pas de palier d'intensité électrique nulle.

Une relation existe entre la vitesse de rotation de la machine et/ou le couple et le décalage angulaire magnétique entre la direction du champs magnétique statorique "CMs" et la direction du champ magnétique rotorique "CMr". In est donc possible de jouer sur le couple et/ou la vitesse de rotation de la machine en ajustant le décalage angulaire. Le champ magnétique statorique "CMs" peut être en avance d'un décalage angulaire généralement compris entre 0° et 90° par rapport au champ magnétique rotorique "CMr".

Selon une première variante, le décalage angulaire magnétique est fixé à un angle déterminé, par exemple 0°, 30°, 60° ou 90°.

Selon une deuxième variante, le décalage angulaire magnétique varie de manière linéaire entre un premier angle déterminé et un deuxième angle déterminé, par exemple entre 30° et 90°.

Selon une troisième variante, le décalage angulaire magnétique varie de manière discrète par échelons d'angles déterminés.

L'alterno-démarreur 10 a été testé pour différentes configurations du procédé de commande.

Lors du premier test de référence "T1 ", l'alterno-démarreur 10 a été commandé selon le procédé de commande connu de l'état de la technique. La durée de l'étape de préflux "E1" est de 150 ms de manière que le champ magnétique rotorique "CMr" ait atteint sa valeur maximale de régime permanent. Le décalage angulaire magnétique a été commandé de manière linéaire selon une pente de 30° jusqu'à 90°. La rotation du champ magnétique statorique "CMs" est commandée à 180° d'angle électrique "θ".

Lorsque l'alterno-démarreur 10 est commandé selon le procédé de commande du test de référence "T1", la tension de pointe du brin tendu 52 au démarrage de l'alterno-démarreur 10 est de 3800 N, ce qui excède la tension de détérioration.

En revanche, le temps de relance du moteur thermique 11 est très court. Le moteur thermique 11 est en effet, relancé seulement 208 ms après le début de l'étape de préflux "E1".

Lors des cinq tests suivants, l'alterno-démarreur 10 a été commandé par un procédé de commande réalisé selon les enseignements de l'invention, avec une première étape de préflux "E1" raccourcie.

Lors du deuxième test de référence "T2", la durée de l'étape de préflux "E1" est de 10 ms. Le décalage angulaire magnétique a été commandé de manière linéaire selon une pente de 30° jusqu'à 90°. La rotation du champ magnétique statorique "CMs" est commandée à 180° d'angle électrique "0".

Lorsque l'alterno-démarreur 10 est commandé selon le procédé de commande du test "T2", la tension de pointe du brin tendu 52 au démarrage de l'alterno-démarreur 10 est de 2960 N, ce qui est inférieur à la tension de détérioration.

Ainsi, seule l'étape de préflux "E1" diffère du procédé selon le test de référence "T1", et on constate que la tension de pointe du brin tendu 52 de la courroie de transmission 48 est 22% plus faible dans le test "T2" que dans le test de référence "T1".

Le temps de démarrage du moteur thermique 11 est en revanche de 284 ms. Cependant, ce temps de démarrage demeure acceptable pour un système d'arrêt-relance du moteur thermique 11.

Lors du troisième test de référence "T3", la durée de l'étape de préflux "E1" est de 10 ms. Le décalage angulaire magnétique demeure constant à 0°. La rotation du champ magnétique statorique "CMs" est commandée à 180° d'angle électrique "θ".

Lorsque l'alterno-démarreur 10 est commandé selon le procédé de commande du test "T3", la tension de pointe du brin tendu 52 au démarrage de l'alterno-démarreur 10 est de 2340 N, ce qui est inférieur à la tension de détérioration.

On constate que la tension de pointe du brin tendu 52 de la courroie de transmission 48 est 38% plus faible dans le test "T3" que dans le test de référence "T1".

Le temps de démarrage du moteur thermique 11 est en revanche de 314 ms. Cependant, ce temps de démarrage demeure acceptable pour un système d'arrêt-relance du moteur thermique 11.

Lors du quatrième test de référence "T4", la durée de l'étape de préflux "E1" est de 10 ms. Le décalage angulaire magnétique demeure constant à 30°. La rotation du champ magnétique statorique "CMs" est commandée à 180° d'angle électrique "8".

Lorsque l'alterno-démarreur 10 est commandé selon le procédé de commande du test "T4", la tension de pointe du brin tendu 52 au démarrage de l'alterno-démarreur 10 est de 2530 N, ce qui est inférieur à la tension de détérioration.

On constate que la tension de pointe du brin tendu 52 de la courroie de transmission 48 est 33% plus faible dans le test "T4" que dans le test de référence "T1".

Le temps de démarrage du moteur thermique 11 est en revanche de 425 ms. Ce temps de démarrage demeure acceptable pour un système d'arrêt-relance du moteur thermique 11, mais il paraît tout de même plus avantageux de commander l'alterno-démarreur 10 selon le procédé du test "T3" pour obtenir une tension de pointe moins importante et un temps de démarrage plus court.

Lors du cinquième test de référence "T5", la durée de l'étape de préflux "E1" est de 10 ms. Le décalage angulaire magnétique demeure constant à 60°. La rotation du champ magnétique statorique "CMs" est commandée à 180° d'angle électrique "θ".

Lorsque l'alterno-démarreur 10 est commandé selon le procédé de commande du test "T5", la tension de pointe du brin tendu 52 au démarrage de l'alterno-démarreur 10 est de 2900 N, ce qui est inférieur à la tension de détérioration.

On constate que la tension de pointe du brin tendu 52 de la courroie de transmission 48 est 22% plus faible dans le test "T5" que dans le test de référence "T1".

Le temps de démarrage du moteur thermique 11 est en revanche de 302 ms. Ce temps de démarrage demeure acceptable pour un système d'arrêt-relance du moteur thermique 11, mais il paraît tout de même plus avantageux de commander l'alterno-démarreur 10 selon le procédé du test "T2" pour obtenir une tension de pointe du même ordre de grandeur et un temps de démarrage plus court.

Lors du sixième test de référence "T6", la durée de l'étape de préflux "E1" est de 10 ms. Le décalage angulaire magnétique a été commandé de manière linéaire selon une pente de 30° jusqu'à 90°. La rotation du champ magnétique statorique "CMs" est commandée à 120° d'angle électrique "θ".

Lorsque l'alterno-démarreur 10 est commandé selon le procédé de commande du test "T6", la tension de pointe du brin tendu 52 au démarrage de l'alterno-démarreur 10 est de 2850 N, ce qui est inférieur à la tension de détérioration.

On constate que la tension de pointe du brin tendu 52 de la courroie de transmission 48 est 25% plus faible dans le test "T6" que dans le test de référence "T1".

Le temps de démarrage du moteur thermique 11 est en revanche de 361 ms. Ce temps de démarrage demeure acceptable pour un système d'arrêt-relance du moteur thermique 11, mais il paraît tout de même plus avantageux de commander l'alterno-démarreur 10 selon le procédé du test "T2" pour obtenir une tension de pointe du même ordre de grandeur et un temps de démarrage plus court.

Ainsi, le procédé de commande de l'alterno-démarreur 10 réalisé selon les enseignements de l'invention, en raccourcissant l'étape de préflux "E1", permet de créer avant, le démarrage de l'étape "E2", un champ magnétique rotorique "CMr" ayant une intensité inférieure à l'intensité maximale de régime permanent. Ainsi, la tension de pointe dans le brin tendu 52 de la courroie de transmission 48 est limitée en deçà de la tension de détérioration tout en obtenant un temps de démarrage suffisamment court pour un système d'arrêt-relance du moteur thermique 11 d'un véhicule automobile.

Le procédé réalisé dans les conditions des deuxième et troisième tests "T2, T3" permet notamment d'obtenir une diminution de 22% à 38% de la tension de pointe du brin tendu 52 tout en conservant un temps de démarrage du moteur thermique 11 très faible.

On comprendra bien entendu que l'invention couvre aussi un tel procédé appliqué de manière générale à un moteur électrique synchrone autopiloté qui est susceptible d'être utilisé dans un système d'arrêt-relance d'un moteur thermique 11 de véhicule automobile et dont le rotor 14 est lié en rotation au vilebrequin 46 du moteur thermique 11 par l'intermédiaire d'un organe souple de transmission.

## Revendications

1. Procédé de commande d'un alterno-démarreur (10) autopiloté pour le démarrage ou la relance d'un moteur thermique (11) de véhicule automobile, l'alterno-démarreur (10) comportant :
- un rotor (14) équipé d'un bobinage de rotor (22) ;
- un stator (16) équipé d'un jeu de bobinages de stator (40) ;
- un organe de transmission souple (48) du couple du rotor (14) de l'alterno-démarreur (10) au vilebrequin (46) du moteur thermique (11), tel qu'une courroie de transmission ;
le procédé de commande comportant :
- une première étape de préflux (E1) au cours de laquelle le bobinage de rotor (22) est excité par un courant électrique de préflux de manière à induire un champ magnétique rotorique (CMr) tandis que les bobinages de stator (40) n'est pas excité de manière que le rotor (14) ne soit pas entraîné en rotation ;
- et une deuxième étape de démarrage (E2) qui est déclenché à la fin de la première étape de préflux (E1) et au cours de laquelle les bobinages de stator (40) sont excités tandis que le bobinage de rotor (22) est maintenu excité de manière que le rotor (14) soit entraîné en rotation,
**caractérisé en ce que** la durée de l'étape de préflux (E1) est réglée entre 10 et 100 ms environ, à une valeur inférieure à la durée nécessaire pour l'établissement d'un régime permanent du champ magnétique rotorique (CMr) par rapport à l'intensité du courant de préflux, et **en ce que** le décalage angulaire magnétique entre le champ magnétique statorique (CMs) et le champ magnétique rotorique (CMr) est réglé entre 0° et 90°.

2. Procédé selon la revendication précédente, **caractérisé en ce que** l'étape de préflux (E1) dure 10 ms.

3. Procédé selon la revendication 1 ou 2, **caractérisé en ce que** la rotation du champ magnétique statorique (CMs) est commandée à 120° d'angle électrique.

4. Procédé selon la revendication 1 ou 2, **caractérisé en ce que** la rotation du champ magnétique statorique (CMs) est commandée à 180° d'angle électrique.

5. Procédé selon l'une quelconque des revendications 1 à 4, **caractérisé en ce que** le décalage angulaire magnétique varie de manière linéaire entre un premier angle déterminé et un deuxième angle déterminé.

6. Procédé selon l'une quelconque des revendications 1 à 4, **caractérisé en ce que** le décalage angulaire magnétique varie de manière discrète par échelons d'angles déterminés.

## Patentansprüche

1. Verfahren zur Steuerung eines selbstgesteuerten Starter-Generators (10) zum Anlassen oder erneuten Anlassen eines Wärmekraftmotors (11) eines Kraftfahrzeugs, wobei der Starter-Generator (10) aufweist:
- einen mit einer Rotorwicklung (22) ausgestatteten Rotor (14);
- einen mit einem Satz von Statorwicklungen (40) ausgestatteten Stator (16);
- ein elastisches Übertragungsorgan (48) des Drehmoments des Rotors (14) des Starter-Generators (10) an die Kurbelwelle (46) des Wärmekraftmotors (11), wie ein Treibriemen;
wobei das Steuerverfahren aufweist:
- einen ersten Vorflussschritt (E1), während dessen die Rotorwicklung (22) von einem Vorflussstrom erregt wird, um ein Rotor-Magnetfeld (CMr) zu induzieren, während die Statorwicklungen (40) nicht erregt werden, damit der Rotor (14) nicht in Drehung versetzt wird;
- und einen zweiten Anlassschritt (E2), der am Ende des ersten Vorflussschritts (E1) ausgelöst wird und während dessen die Statorwicklungen (40) erregt werden, während die Rotorwicklung (22) erregt gehalten wird, damit der Rotor (14) in Drehung versetzt wird,
**dadurch gekennzeichnet, dass** die Dauer des Vorflussschritts (E1) zwischen etwa 10 und 100 ms eingestellt wird, auf einen Wert geringer als die notwendige Dauer für den Aufbau eines stationären Betriebs des Rotor-Magnetfelds (CMr) bezüglich der Stärke des Vorflussstroms, und dass der magnetische Winkelversatz zwischen dem Stator-Magnetfeld (CMs) und dem Rotor-Magnetfeld (CMr) zwischen 0° und 90° eingestellt wird.

2. Verfahren nach dem vorhergehenden Anspruch, **dadurch gekennzeichnet, dass** der Vorflussschritt (E1) 10 ms dauert.

3. Verfahren nach Anspruch 1 oder 2, **dadurch gekennzeichnet, dass** die Drehung des Stator-Magnetfelds (CMs) mit einem elektrischen Winkel von 120° gesteuert wird.

4. Verfahren nach Anspruch 1 oder 2, **dadurch gekennzeichnet, dass** die Drehung des Stator-Magnetfelds (CMs) mit einem elektrischen Winkel von 180° gesteuert wird.

5. Verfahren nach einem der Ansprüche 1 bis 4, **dadurch gekennzeichnet, dass** der magnetische Winkelversatz linear zwischen einem ersten bestimmten Winkel und einem zweiten bestimmten Winkel variiert.

6. Verfahren nach einem der Ansprüche 1 bis 4, **dadurch gekennzeichnet, dass** der magnetische Winkelversatz getrennt in bestimmten Winkelstufen variiert.

## Claims

1. Method for controlling a self-piloted alternator-starter (10) for starting or restarting a motor vehicle combustion engine (11), the alternator-starter (10) comprising:
- a rotor (14) equipped with a rotor coil (22);
- a stator (16) equipped with a set of stator coils (40) ;
- a flexible transmission member (48) transmitting the torque from the rotor (14) of the alternator-starter (10) to the crankshaft (46) of the combustion engine (11), such as a transmission belt;
the control method comprising:
- a prefluxing first step (E1) during which the rotor coil (22) is energized with a prefluxing electric current so as to induce a rotor magnetic field (CMr) while the stator coils (40) are not energized, so that the rotor (14) is not driven in rotation;
- and a starting second step (E2) which is initiated at the end of the prefluxing first step (E1) and during which the stator coils (40) are energized while the rotor coil (22) is kept energized so that the rotor (14) is driven in rotation,
**characterized in that** the duration of the prefluxing step (E1) is set at between around 10 and 100 ms, to a value shorter than the time necessary to establish a steady state for the rotor magnetic field (CMr) with respect to the strength of the prefluxing current, and **in that** the magnetic angular offset between the stator magnetic field (CMs) and the rotor magnetic field (CMr) is set between 0° and 90°.

2. Method according to the preceding claim, **characterized in that** the prefluxing step (E1) lasts 10 ms.

3. Method according to Claim 1 or 2, **characterized in that** the rotation of the stator magnetic field (CMs) is commanded at an electrical angle of 120°.

4. Method according to Claim 1 or 2, **characterized in that** the rotation of the stator magnetic field (CMs) is commanded at an electrical angle of 180°.

5. Method according to any one of Claims 1 to 4, **characterized in that** the magnetic angular offset varies linearly between a first determined angle and a second determined angle.

6. Method according to any one of Claims 1 to 4, **characterized in that** the magnetic angular offset varies discretely in steps of determined angle.
